# EUROPEAN PATENT SPECIFICATION

(11) **EP 1 599 618 B1**
(45) Date of publication and mention of the grant of the patent: **07.05.2008**
(21) Application number: 04717160.8
(22) Date of filing: 04.03.2004
(51) Int. Cl.: C25B 1/02, C25B 1/10, C25B 9/06, C25B 15/00

(54) **APPARATUS FOR SEPARATING A GAS FROM A MIXTURE OF THE GAS WITH A LIQUID**
VERFAHREN ZUR ABTRENNUNG EINES GASES AUS EINEM GEMISCH DES GASES MIT EINER FLÜSSIGKEIT
APPAREIL DESTINE A SEPARER UN GAZ D'UN MELANGE DE GAZ ET DE LIQUIDE

(30) Priority: 05.03.2003 GB 0305007
(43) Date of publication of application: 30.11.2005
(73) Proprietor: Parker Hannifin Limited, Hemel Hempstead HP2 4SJ (GB)
(72) Inventor: BLENKIRON, Craig, Stuart, Northumberland NE42 6BB (GB)
(74) Representative: Belcher, Simon James
(86) International application number: PCT/GB2004/000913
(87) International publication number: WO 2004/079049

(56) References cited:
- EP-A- 0 417 647
- WO-A-03/095070
- US-A- 5 690 797
- US-A- 5 711 865
- US-B1- 6 652 719

## Description

The present invention relates to apparatus for separating a gas from a mixture of the gas with a liquid.

US-5037518 discloses apparatus for generating hydrogen by electrolysis of water. The apparatus comprises an electrolysis cell. Water is supplied to the cell from first and second reservoirs. Hydrogen which is discharged from the cathode side of the cell contains water, for example as droplets or as vapour. The hydrogen is separated from associated water in a chamber in which bulk water can collect. The hydrogen is discharged from the chamber and passes through dryer components which include a drying coil and a desiccant chamber, before discharge to an end use application.

Water from the anode side of the electrolysis cell is discharged into an annex to the first reservoir which has a vent for associated oxygen. Accumulation of oxygen in the first reservoir itself is minimised in this way.

Similarly, water from the separation chamber is discharged into an annex to the second reservoir which has a vent for associated hydrogen. Accumulation of hydrogen in the second reservoir itself is minimised in this way.

The use of several components sequentially to treat the hydrogen which is discharged from the electrolysis cell complicates assembly and maintenance of the apparatus which is disclosed in US-5037518.

The present invention provides apparatus for separating gas from a mixture of that gas with a liquid which includes a manifold block to which individual gas treatment components can be physically connected, and which provides at least one conduit for the gas to flow through into and out of the components.

Accordingly, in one aspect, the invention provides apparatus for separating a gas from a mixture of the gas with a liquid, according to claim 1.

In another aspect, the invention provides a device for generating gas by electrolysis of a liquid, which comprises:
a. an electrolysis cell from which a mixture of the gas and the liquid is discharged,
b. apparatus for separating the gas from the said mixture as specified above, and
c. a conduit through which the mixture of the gas and the liquid which is discharged from the electrolysis cell is supplied to the separation apparatus.

The apparatus of the invention has the advantage that when physically connected together, the manifold block and the gas treatment components form an integral unit that can be manipulated more easily than separation apparatus which comprises physically separate components. The apparatus of the invention has advantages during assembly of gas generation apparatus and subsequent maintenance. This means that the apparatus can be manufactured and assembled so as to be supplied as a single unit to a user, who can then attach the apparatus to other components of a gas generation apparatus. In addition, the apparatus can be readily removed as a single part from the gas generation apparatus, for example for servicing or replacement.

The apparatus has the advantage that the individual gas treatment components can be physically disconnected from the manifold block. Moreover, disconnection of the components is possible with the apparatus attached to equipment such as an electrolysis cell, as well as when it is detached and isolated. Accordingly, there is great flexibility in terms of servicing the apparatus. For example, in the event that the adsorbent in the adsorption chamber requires replacement, for example because it is saturated with moisture, the adsorption chamber can be entirely removed. Similarly, the separator chamber can be easily removed, and this might be useful for servicing the gas outlet valve, when present.

Preferably, the separator chamber is located below the manifold block. Gas with associated liquid can be supplied to the chamber through a port towards the top of the chamber, preferably a port which communicates with a conduit in the manifold block. The gas outlet from the chamber can be provided in the top of the chamber, preferably directly into the manifold block.

Preferably, the adsorption chamber is located above the manifold block. The gas inlet can be in the base of the adsorption chamber. The gas outlet from the adsorption chamber can communicate with a conduit in the manifold block, and will be in or close to the base of the adsorption chamber when the adsorption chamber is located above the manifold block.

A mixture of gas and liquid can be supplied directly to the separator chamber by means of the inlet on the separator chamber. However, it can be preferred for the manifold block to include a manifold inlet, and an inlet conduit which extends between the manifold inlet and the inlet in the separator chamber. This allows a mixture of gas and liquid to be supplied to the manifold block through the manifold inlet and conducted to flow through the bulk of the manifold block to the separator chamber through the inlet therein.

A pressure sensor may be provided to measure pressure at the inlet to the separator chamber. For example, it can be provided in the line leading to the separator chamber, or provided at the inlet. When the gas and associated liquid enter the separator chamber through the manifold block, the pressure sensor can be provided at the manifold inlet. Preferably, the pressure sensor is attached to the manifold block. The pressure sensor should be compatible with the conditions that it will be exposed to when the apparatus is in use, including the temperature and pressure ranges, and it should be inert towards materials with which it will come into contact.

Preferably, the gas outlet from the separator chamber has a valve which closes when the liquid level in the separator chamber exceeds a predetermined level. The valve can be a float valve. During normal operation the liquid level is such that the float valve is positioned so that the gas outlet is open. However, when the level of the liquid in the separator rises to a predetermined level the float valve is positioned so as to close the gas outlet and thereby to prevent the flow of liquid through the gas outlet.

Gas which has been dried may be discharged directly through the gas outlet of the adsorption chamber for collection or further treatment. However, it will generally be preferred for the manifold block to include an outlet conduit in the bulk of the manifold block into which gas is discharged from the gas outlet in the adsorption chamber when the adsorption chamber is physically connected to the block. The manifold block may also include at least one pressure sensor for measuring the pressure of the gas entering or leaving the adsorption chamber. Preferably, the pressure sensor is attached to the manifold block. The pressure sensor should be compatible with the conditions that it will be exposed to when the apparatus is in use, including the temperature and pressure ranges, and it should be inert towards materials with which it will come into contact.

The manifold block may provide a connector outlet and a connector inlet in the connector conduit, which can be interconnected by means of an external conduit, so that gas flowing from the separator chamber to the adsorption chamber through the connector conduit flows through the connector outlet and the connector inlet, when interconnected by means of an external conduit. An external conduit may include an additional drying component through which gas from the separator chamber flows to make it more dry.

The additional drying component may comprise a drying membrane, preferably a moisture exchange membrane. For example, the moisture exchange membrane may be made from a solid polymer electrolyte membrane, such as a sulphonated perfluorocarbon membrane such as that sold under the trade mark NAFION. The drying membrane can be arranged as a tube in which the gas and associated liquid can flow. A difference in liquid concentration between the gas and liquid in the tube, and atmosphere, can lead to diffusion of liquid through the membrane. An example of a suitable sulphonated perfluorocarbon membrane is that sold by Perma Pure Inc under the designation ME-Series.

Preferably, the manifold block is made from a polymeric material. Examples of suitable materials include polyolefins, especially polyethylene, polypropylene, polyamides, polyesters and polycarbonates etc. The polymer should be selected for appropriate physical properties (for example, melting or softening temperature, tensile properties, compatibility/ corrosion resistance, and durability etc) which will enable it to withstand the conditions to which it will be exposed during use. Particularly preferred materials are polycarbonates.

The use of polymeric materials for the manifold block has the advantage that it can be manufactured using a moulding technique. An example of a suitable moulding technique is injection moulding. Machining techniques can be used, instead of or in addition to moulding techniques, especially to form features such as conduits within the block for flow of fluids, fastening features (for example screw threads, bayonet features), or sealing features (for example O-ring seats, sealing surfaces etc).

One or both of the separator and adsorption chamber can be made from polymeric materials. Suitable materials include those mentioned above for the manifold block. It can be preferred for the material of one or both of the separator and adsorption chambers to be transparent. A transparent separator chamber has the advantage that it enables a user to readily observe the level of liquid in the separator chamber, especially to observe that liquid is being discharged properly from the chamber. A transparent adsorption chamber enables a user to observe the adsorbent material, for example to assess whether it should be replaced.

The adsorbent will be selected according to the liquid which is to be adsorbed. When the liquid is water, the adsorbent may have desiccant properties. Examples of useful adsorbents include alumina, silica gel, impregnated silica gel, and certain molecular sieves and zeolites. Preferably, the adsorbent is in the form of granules, pellets or beads for ease of handling and packing in the adsorption chamber. A suitable silica gel such as that sold by Crosfield Limited under the designation SORBSIL Chameleon C. A suitable zeolite molecular sieve is based on the sodium calcium magnesium aluminosilicate. The adsorption chamber can contain a mixture of an impregnated silica gel and a molecular sieve.

The manifold block can be formed as a single piece. Alternatively, it can be formed from two or more pieces which are then assembled to form the manifold block. The pieces can be assembled by bonding using a technique which does not use an additional material (especially welding), or using a bonding technique which uses an additional material such as an adhesive. The pieces can be assembled using a mechanical fastening technique, for example using threaded fasteners. It will generally be preferred for there to be a pressure-tight seal between pieces of a multipiece manifold block, which might require incorporation of a sealing component such as an O-ring.

The physical connections between the separator chamber and the manifold block, and the adsorption chamber and the manifold block, should preferably be releasible, allowing either of the chambers to be detached from the manifold block, for example for servicing or replacement. Examples of suitable mechanical connections include those which rely on screw threads or bayonet formations. It will generally be important for there to be a fluid tight seal between each of the chambers and the manifold. It can be preferred to include an O-ring in the space between each of the chambers and the manifold.

The manifold block may include fixation features for mounting the block and the components attached to it in a gas separation assembly. For example, the manifold block may have bores extending through it to receive threaded fasteners which can be used to mount it to an assembly. Other mechanical connections might be based on clip mechanisms.

The apparatus may include a valve downstream of the gas outlet from the adsorption chamber, by which the flow of gas from the apparatus can be stopped. Preferably the valve is attached to the manifold, near the outlet conduit of the manifold. The valve may be of any suitable type as appreciated by those of skill in the art when taking into account the nature of the gas that the valve is to be exposed to. Preferably, the valve is a solenoid valve.

The apparatus may include a pressure sensor upstream of the inlet of the separator chamber to generate a signal in fault conditions. Preferably, the signal is an electrical signal. Preferably, the signal from the pressure sensor causes the supply of power to the electrolysis cell to be interrupted in fault conditions, thereby preventing the flow of the mixture of gas and liquid into the separator. Preferably, the pressure sensor is attached to the manifold, near the manifold inlet. Preferably, the pressure sensor is a pressure switch.

The present invention will now be described by way of example with reference to the accompanying drawings in which:
Figure 1 is a schematic representation in the form of a flow chart, showing components of gas generation apparatus;
Figure 2 is a horizontal cross-section of a manifold block;
Figure 3 is a vertical cross-section of a manifold block taken along the line A-A in Figure 2;
Figure 4 is a vertical cross-section of a manifold block taken along the line B-B in Figure 2;
Figure 5 is a vertical cross-section of a manifold block taken along the line C-C in Figure 2; and
Figure 6 is a collection of top, side and perspective views of the manifold, showing internal and external features.
Figure 7 is an isometric view of a manifold block with the separator chamber and the adsorption chamber physically connected to it.

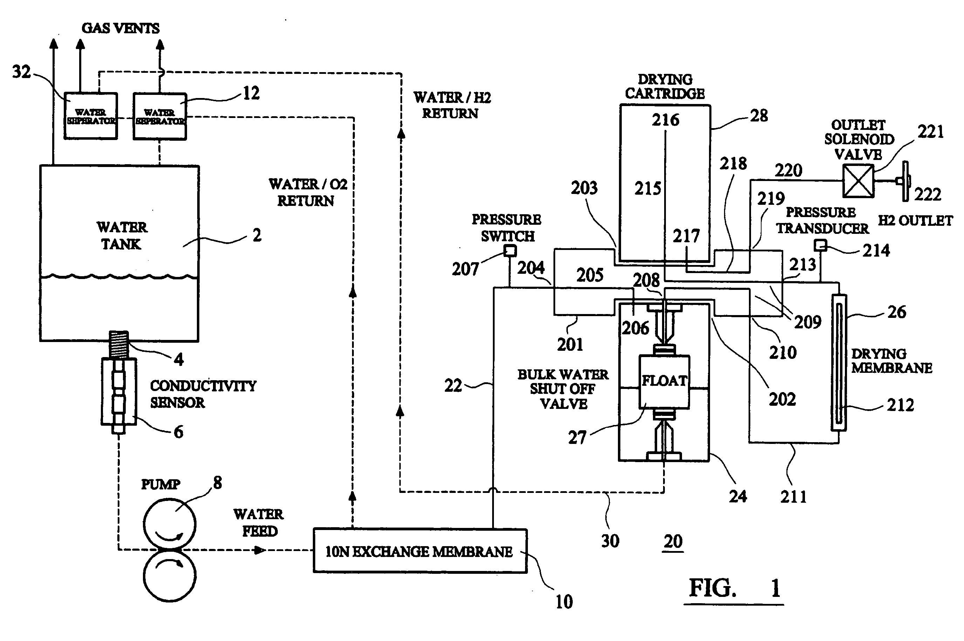

Referring to the drawings, Figure 1 shows gas generation apparatus such as hydrogen generation apparatus in which water is exposed to a potential difference in an electrolysis cell. The discussion that follows will be restricted to this application, although the apparatus of the invention can be used with other liquids to generate other gases.

The gas generation apparatus comprises a reservoir 2 for the water which is to be treated. Water is discharged from the reservoir 2 through an outlet 4. The outlet has a conductivity sensor 6 mounted in it by which the presence of impurities in water from the reservoir can be detected. In the event that impurities are detected, by an increase in conductivity above a predetermined level, the power supply to the electrolysis cell can be interrupted.

Water from the reservoir is pumped by means of a pump 8 through an electrolysis cell 10 which contains an anode, a cathode and a solid polymeric electrolyte which is provided by an ion-exchange membrane, especially a sulphonated perfluorocarbon membrane such as that sold under the trade mark NAFION. Details of the construction of an electrolysis cell such as might be used in the apparatus of the present invention are disclosed in US-3870616 and US-5037518.

Water from the cathode side of the electrolytic cell is pumped from the electrolytic cell to a first reservoir separator chamber 12 in which oxygen which is associated with the water (carried by the water in solution or as dispersed bubbles) can separate from the water.

Hydrogen is discharged from the cathode side of the electrolysis cell into separator apparatus 20 through a line 22. The hydrogen that is supplied to the separator apparatus has water associated with it, as droplets or as vapour. The separator apparatus includes a manifold block 201 which is attached a separator chamber 24 and an adsorption chamber 28. The manifold block includes a first mounting point 202 at which the separator chamber 24 can be physically connected to the block, preferably by means of a screw or bayonet type fitting. The manifold block includes a second mounting point 203 at which the adsorption chamber 28 can be physically connected to the block.

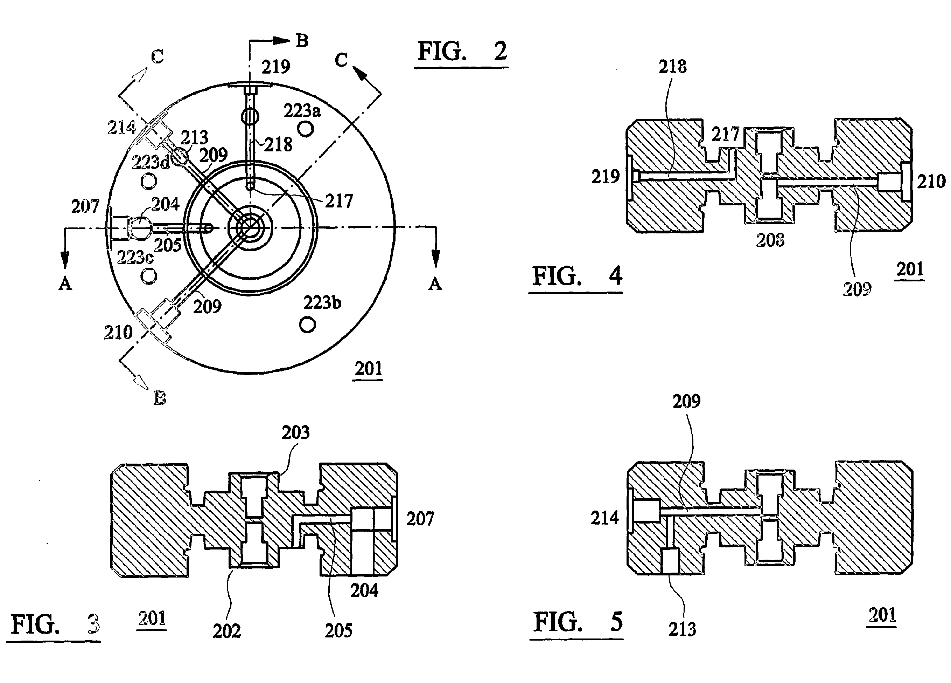

The manifold block 201 has a plurality of conduits disposed internally and externally. The internal conduits are shown in more detail in Figures 2 to 5. The conduits enable fluid communication between the separator chamber 24 and the adsorption chamber 28. The mixture of hydrogen and water is conducted through line 22 to a manifold inlet 204 which is connected to an inlet 206 located at the top of the separator chamber by means of an inlet conduit within the manifold block. Line 22 can have a pressure switch 207 in it which closes the line when the pressure in it exceeds a predetermined level, for example in the event that the pressure in the chamber 24 increases because the water outlet line is blocked and water accumulates in the chamber, closing the float valve 27. The pressure switch may be attached to the manifold block, disposed at the manifold inlet 204.

The hydrogen/water mixture enters the top of the separator chamber 24 through the inlet 206 and liquid water collects at its base. Hydrogen can escape from the chamber 24 through an outlet 208 located at the top of the chamber. The discharge of hydrogen from the chamber is controlled by means of a float valve 27. The float valve is sensitive to the level of water in the chamber. The float valve closes the hydrogen outlet 208 from the chamber when the level of water reaches a predetermined level, to prevent collected water passing from the chamber into other components of the separator apparatus, for example in the event that water cannot be discharged from the chamber.

After passing through the separator outlet 208, the hydrogen passes through a connecting conduit 209 within the manifold block to a connector outlet 210, through which the hydrogen flows into an external conduit 212 disposed outside the manifold block. The external conduit is provided by a drying membrane material, preferably a moisture exchange drying membrane (for example a membrane made from a sulphonated perfluorocarbon membrane such as that sold under the trade mark NAFION). The use of a drying membrane of this general kind is disclosed in US-5037518.

Hydrogen which has passed through the external conduit is supplied to a connector inlet 213 in the manifold, through which the hydrogen flows into the connecting conduit 209 within the manifold block. A pressure sensor 214 can be included between the external conduit and the connecting conduit 209 in the manifold block so as to detect undesirable increases in the pressure. It can also detect unwanted reductions in that pressure which can indicate a leak in the line through which hydrogen is supplied to the end use application. The pressure sensor can be disposed in the external conduit or at the connector inlet. Preferably, the pressure sensor is attached to the manifold block.

The hydrogen in the connecting conduit then passes into an adsorption chamber 28 through an inlet 216, the adsorption chamber being physically connected to the manifold block at the second mounting point 203. Preferably, the hydrogen is conducted in a line 215 within the adsorption chamber before being released into the adsorption chamber at the top. The adsorption chamber preferably contains a desiccant such as silica gel or a molecular sieve or both. The adsorption chamber 28 has an outlet 217 located near the bottom of the chamber through which the dried hydrogen is released into a conduit 218 within the manifold block. By locating the inlet 216 and outlet 217 at opposite ends of the adsorption chamber, the hydrogen has to pass through the majority of the length of the adsorption chamber, and therefore its exposure to the adsorbent is maximised. The relative positions of the inlet 216 and outlet 217 may be reversed.

The conduit 218 is connected at an outlet 219 to a line 220 through which the hydrogen passes to an outlet 222 that is adapted for connection to an end use appliance. The line 220 can include a valve, preferably a solenoid valve 221, which can close the outlet 222 when the apparatus is not in use, or when the pressure in the line is either too high or too low (perhaps due to a leak).

Water which collects in the separator chamber 24 is supplied through a line 30 to a second reservoir separator chamber 32 in which hydrogen which is associated with the water (carried by the water in solution or as dispersed bubbles) can separate from the water.

The reservoir 2, the first reservoir separator chamber 12 and the second reservoir separator chamber 32 are formed as an integral housing. Gas generator apparatus which incorporates such a housing is disclosed in an application which is filed with the present application, claiming priority from UK patent application no. 0305005.1.

The reservoir 2, the first reservoir separator chamber 12 and the second reservoir separator chamber 32 are connected to one another in series, with the reservoir 2 connected to the first reservoir separator chamber 12, and the first reservoir separator chamber 12 connected to the second reservoir separator chamber 32. Gas generator apparatus with such connections is disclosed in an application which is filed with the present application, claiming priority from UK patent application no. 0305006.9.

Figures 2 to 5 show horizontal and vertical cross-sections of a manifold block, detailing the various inlets, outlets, conduits and fixation features. Figure 2 shows the location of bores 223a to 223d extending through the manifold block which can receive threaded fasteners for attaching the manifold block to a gas generation assembly. The hydrogen/water mixture from the electrolysis cell enters the manifold inlet 204 and is conducted into the inlet conduit 205 (see Figures 2 and 3). A connection for the pressure sensor 207 is provided in the manifold so that the pressure in the manifold inlet and inlet conduit can be determined. Figure 3 shows the first and second mounting points 202, 203 at which the separator chamber and the adsorption chamber, respectively, can be physically connected to the block. Also shown is the outlet from the inlet conduit 205 for the passage of water/ hydrogen into the separator chamber when it is physically connected to the block at the first mounting point 202.

Figure 4 shows the connecting conduit 209 through which hydrogen can flow from the separator chamber outlet 208 at the first mounting point 202 to the connector outlet 210. The connector outlet 210 can be connected to an external conduit 211 which can include a drying component 212 such as a drying membrane, as described above in relation to Figure 1. Figure 4 also shows the manifold conduit 218 through which dried hydrogen can pass from the outlet of the adsorption chamber 217, when physically connected at the second mounting point 203, to the line 220 when connected to the manifold at outlet 219.

Figure 5 shows the connecting conduit 209 through which hydrogen can flow from the external conduit 211 and drying component 212, when connected at the connector inlet 213, to the adsorption chamber 28, when physically connected at the second mounting point 203. Figure 5 also shows the point on the manifold at which a pressure sensor 214 can be connected in order to determine the pressure in the connecting conduit.

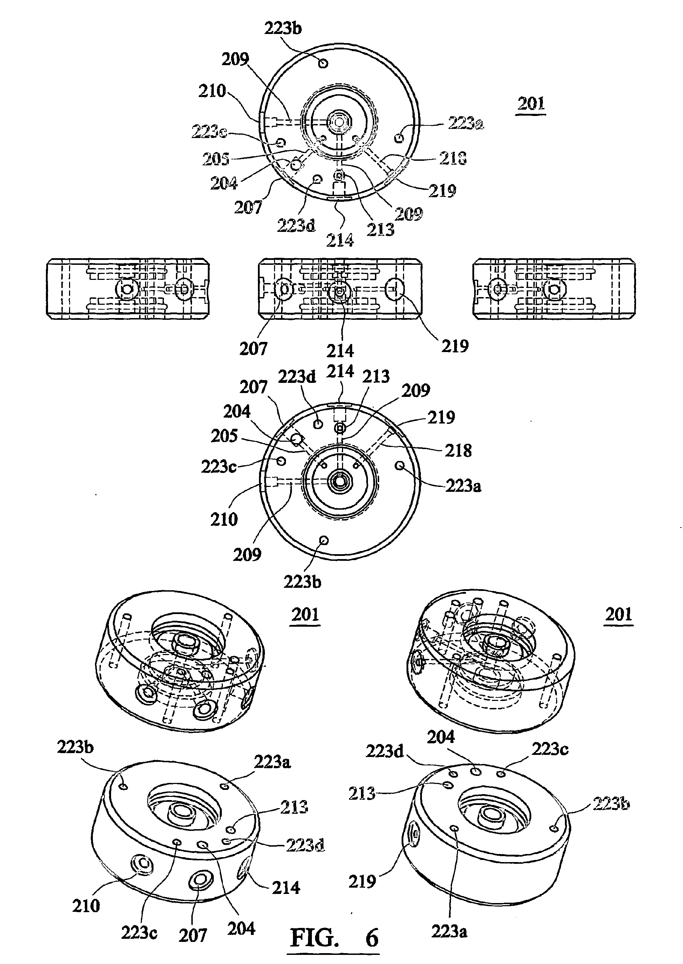

Figure 6 is a collection of top, bottom, side and perspective views of the manifold block 201, showing internal and external features. Figure 6 shows how the inlets 204 and 213, outlets 210 and 219, and mounting points can be machined into the manifold block. It also shows how the conduits 205, 209, and 218 and fixation bores 223a-d are disposed within the manifold block.

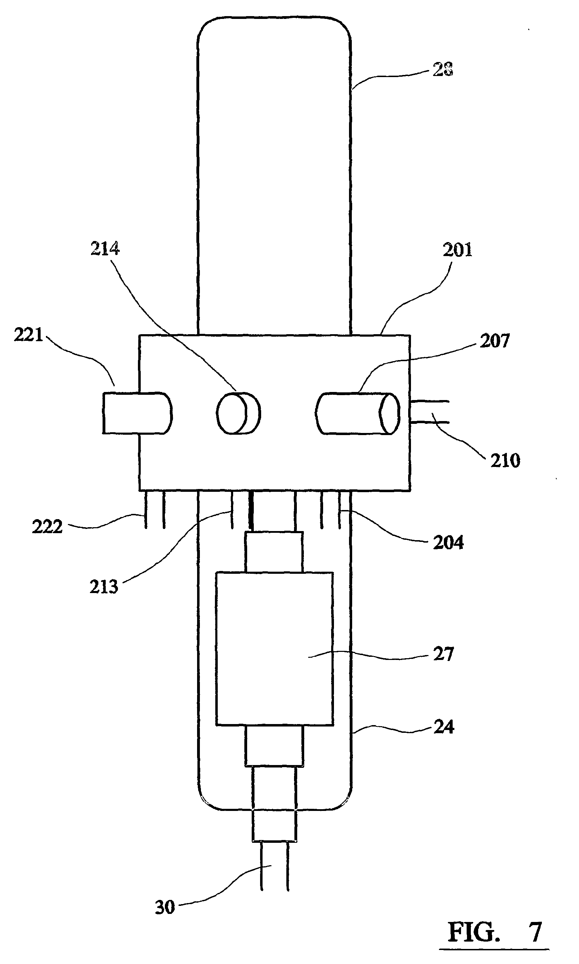

Figure 7 is an isometric view of a manifold block 201 with the separator chamber 24 and the adsorption chamber 28 physically connected. In the particular embodiment shown the separator chamber is located below the manifold block, and the adsorption chamber is located above the manifold block. The pressure sensors 207 and 214, the solenoid valve 221, inlets 204 and 213, and outlets 210 and 222 are also shown.

## Claims

1. Apparatus for separating a gas from a mixture of the gas with a liquid, which comprises:
a. a separator chamber (24) having an inlet for the mixture of the gas and the liquid, a liquid outlet through which liquid is discharged, and a gas outlet,
b. an adsorption chamber (28) containing a quantity of an adsorbent for the liquid, having a gas inlet through which gas to be dried is introduced to the chamber, and a gas outlet through which gas which has been dried is discharged from the chamber,
c. a manifold block (201) which comprises:
i. a first mounting point (202) at which the separator chamber (24) is mounted on the block and thereby physically connected to it,
ii. a second mounting point (203) at which the adsorption chamber (28) is mounted on the block and thereby physically connected to it,
iii. a connecting conduit (209) through which gas can flow, directly or indirectly, at least partly through the bulk of the manifold block, from the gas outlet (208) in the separator chamber to the gas inlet (216) in the adsorption chamber.

2. Apparatus as claimed in claim 1, in which the separator chamber is located below the manifold block.

3. Apparatus as claimed in claim 1, in which the adsorption chamber is located above the manifold block.

4. Apparatus as claimed in claim 1, in which the manifold block includes a manifold inlet, and an inlet conduit which extends between the manifold inlet and the inlet in the separator chamber, so that the mixture of gas and liquid can be supplied to the manifold block through the manifold inlet and conducted to flow through the bulk of the manifold block to the separator chamber through the inlet therein.

5. Apparatus as claimed in claim 1, in which the manifold block includes an outlet conduit in the bulk of the manifold block into which gas is discharged from the gas outlet in the adsorption chamber when the adsorption chamber is physically connected to the block.

6. Apparatus as claimed in claim 5, in which the manifold block includes a pressure transducer by which the pressure of gas discharged from the adsorption chamber can be measured.

7. Apparatus as claimed in claim 1, in which the gas outlet from the separator chamber has a valve which closes when the liquid level in the said chamber exceeds a predetermined level.

8. Apparatus as claimed in claim 1, in which the manifold block provides a connector outlet and a connector inlet in the connector conduit, which can be interconnected by means of an external conduit, so that gas flowing from the separator chamber to the adsorption chamber through the connector conduit flows through the connector outlet and the connector inlet, when interconnected by means of an external conduit.

9. Apparatus as claimed in claim 8, which includes an external conduit extending between the connector outlet and the connector inlet, the external conduit including an additional drying component through which gas from the separator chamber flows to make it more dry.

10. Apparatus as claimed in claim 9, in which the additional drying component comprises a drying membrane, preferably a moisture exchange membrane.

11. Apparatus as claimed in claim 1, in which the manifold block includes fixation features, for mounting the block and components attached to it in a gas separation assembly.

12. Apparatus as claimed in claim 1, which includes a valve, preferably a solenoid valve, downstream of the gas outlet from the adsorption chamber, by which the flow of gas from the apparatus can be stopped.

13. Apparatus for generating gas by electrolysis of a liquid, which comprises:
a. an electrolysis cell from which a mixture of the gas and the liquid is discharged,
b. apparatus for separating the gas from the said mixture, as claimed in claim 1, and
c. a conduit through which the mixture of the gas and the liquid which is discharged from the electrolysis cell is supplied to the separation apparatus.

## Patentansprüche

1. Vorrichtung zum Trennen eines Gases aus einer Mischung aus dem Gas mit einer Flüssigkeit, die folgendes umfasst:
a. eine Trennkammer (24), die einen Einlass für die Mischung aus dem Gas und der Flüssigkeit, einen Flüssigkeitsauslass, durch den die Flüssigkeit ausgelassen wird, und einen Gasauslass umfasst,
b. eine Adsorptionskammer (28), die eine Menge eines Adsorptionsmittels für die Flüssigkeit enthält und die einen Gaseinlass, durch welchen Gas, das zu trocknen ist, in die Kammer eingeführt wird, und einen Gasauslass umfasst, durch welchen Gas, welches getrocknet wurde, aus der Kammer ausgelassen wird,
c. einen Verteilerblock (201), der folgendes umfasst:
i. eine erste Montagestelle (202), an welcher die Trennkammer (24) an dem Block montiert ist und **dadurch** physisch mit diesem verbunden ist,
ii. eine zweite Montagestelle (203), an der die Adsorptionskammer (28) an dem Block montiert und **dadurch** physisch mit diesem verbunden ist,
iii. eine Verbindungsleitung (209), durch welche Gas direkt oder indirekt, zumindest teilweise durch die Masse ("bulk") des Verteilerblocks von dem Gasauslass (208) in der Trennkammer zu dem Gaseinlass (216) in der Adsorptionskammer fließen kann.

2. Vorrichtung nach Anspruch 1, bei der die Trennkammer unterhalb des Verteilerblocks angeordnet ist.

3. Vorrichtung nach Anspruch 1, bei der die Adsorptionskammer oberhalb des Verteilerblocks angeordnet ist.

4. Vorrichtung nach Anspruch 1, bei der der Verteilerblock einen Verteilereinlass und eine Einlassleitung umfasst, welche sich zwischen dem Verteilereinlass und dem Einlass in die Trennkammer erstreckt, so dass die Mischung aus Gas und Flüssigkeit durch den Verteilereinlass in den Verteilerblock zugeführt werden kann und so geleitet werden kann, dass sie durch die Masse des Verteilerblocks und durch den Einlass in der Trennkammer in die Trennkammer eingeführt werden kann.

5. Vorrichtung nach Anspruch 1, bei der der Verteilerblock eine Auslassleitung in der Masse des Verteilerblocks umfasst, in welche Gas aus dem Gasauslass in der Adsorptionskammer ausgelassen wird, wenn die Adsorptionskammer physisch mit dem Block verbunden ist.

6. Vorrichtung nach Anspruch 5, bei der der Verteilerblock einen Druckumwandler umfasst, durch den der Druck des Gases, welches aus der Adsorptionskammer entlassen wird, gemessen werden kann.

7. Vorrichtung nach Anspruch 1, bei der der Gasauslass aus der Trennkammer ein Ventil hat, welches sich schließt, wenn der Flüssigkeitspegel in der Kammer einen vorbestimmten Pegel übersteigt.

8. Vorrichtung nach Anspruch 1, bei der der Verteilerblock in der Verbindungsleitung einen Verbinderauslass und einen Verbindereinlass bereitstellt, die mit Hilfe einer externen Leitung verbunden werden können, so dass Gas, welches von der Trennkammer durch die Verbindungsleitung zur Adsorptionskammer fließt, durch den Verbinder-Auslass und den Verbinder-Einlass fließt, wenn diese durch eine externe Leitung verbunden sind.

9. Vorrichtung nach Anspruch 8, die eine externe Leitung umfasst, die sich zwischen dem Verbinderauslass und dem Verbindereinlass erstreckt, wobei die externe Leitung eine zusätzliche Trocknungskomponente umfasst, durch welche Gas aus der Trennkammer fließt, um es weiter zu trocknen.

10. Vorrichtung nach Anspruch 9, bei der die zusätzliche Trocknungskomponente eine Trocknungsmembran, vorzugsweise eine Feuchtigkeits-Austausch-Membran umfasst.

11. Vorrichtung nach Anspruch 1, bei der der Verteilerblock Befestigungsmerkmale aufweist, um den Block und die Komponenten, die daran befestigt sind, in einer Gastrennanordnung zu montieren.

12. Vorrichtung nach Anspruch 1, die ein Ventil, vorzugsweise ein Magnetventil stromabwärts des Gasauslasses aus der Adsorptionskammer umfasst, durch welches der Fluss des Gases aus der Vorrichtung angehalten werden kann.

13. Vorrichtung zum Erzeugen eines Gases durch Elektrolyse einer Flüssigkeit, die folgendes umfasst:
a. eine Elektrolysezelle, aus der eine Mischung aus dem Gas und der Flüssigkeit ausgelassen wird,
b. eine Vorrichtung nach Anspruch 1 zum Trennen des Gases aus der Mischung, und
c. eine Leitung, durch die die Mischung aus dem Gas und der Flüssigkeit, die aus der Elektrolysezelle ausgelassen wird, in die Trennvorrichtung zugeführt wird.

## Revendications

1. Appareil destiné à séparer un gaz d'un mélange de gaz avec un liquide, qui comprend :
a. une chambre de séparation (24) ayant un orifice d'entrée pour le mélange de gaz et de liquide, un orifice de sortie de liquide à travers lequel le liquide est refoulé, et un orifice de sortie de gaz,
b. une chambre d'adsorption (28) contenant une quantité d'un adsorbant pour le liquide, ayant un orifice d'entrée de gaz à travers lequel un gaz à assécher, est introduit dans la chambre, et un orifice de sortie de gaz à travers lequel le gaz qui a été asséché, est refoulé de la chambre,
c. un bloc collecteur (201) qui comprend :
i. un premier point de montage (202) auquel la chambre de séparation (24) est montée sur le bloc et est, de ce fait, physiquement raccordée à celui-ci,
ii. un second point de montage (203) auquel la chambre d'adsorption (28) est montée sur le bloc et est, de ce fait, physiquement raccordée à celui-ci,
iii. un conduit de raccordement (209) à travers lequel le gaz peut circuler, directement ou indirectement, au moins partiellement à travers la plus grande partie du bloc collecteur, depuis l'orifice de sortie de gaz (208) dans la chambre de séparation vers l'orifice d'entrée de gaz (216) dans la chambre d'adsorption.

2. Appareil tel que revendiqué dans la revendication 1, dans lequel la chambre de séparation est située en dessous du bloc collecteur.

3. Appareil tel que revendiqué dans la revendication 1, dans lequel la chambre d'adsorption est située au-dessus du bloc collecteur.

4. Appareil tel que revendiqué dans la revendication 1, dans lequel le bloc collecteur inclut un orifice d'entrée de collecteur et un conduit d'entrée qui s'étend entre l'orifice d'entrée de collecteur et l'orifice d'entrée dans la chambre de séparation de telle sorte que le mélange de gaz et de liquide peut être fourni au bloc collecteur à travers l'orifice d'entrée de collecteur et conduit pour circuler à travers la plus grande partie du bloc collecteur jusqu'a la chambre de séparation à travers l'orifice d'entrée dans celle-ci.

5. Appareil tel que revendiqué dans la revendication 1, dans lequel le bloc collecteur inclut un conduit de sortie dans la plus grande partie du bloc collecteur dans lequel le gaz est refoule depuis l'orifice de sortie de gaz dans la chambre d'adsorption lorsque la chambre d'adsorption est physiquement raccordée au bloc.

6. Appareil tel que revendiqué dans la revendication 5, dans lequel le bloc collecteur inclut un transducteur de pression par lequel la pression du gaz refoulé de la chambre d'adsorption peut être mesurée.

7. Appareil tel que revendiqué dans la revendication 1, dans lequel l'orifice de sortie de gaz de le chambre de séparation est doté d'une vanne qui se ferme lorsque le niveau de liquide dans ladite chambre dépasse un niveau prédéterminé.

8. Appareil tel que revendiqué dans la revendication 1, dans lequel le bloc collecteur dispose d'un orifice de sortie de raccord et d'un orifice d'entrée de raccord dans le conduit de raccord, qui peut être interconnecté au moyen d'un conduit externe, de telle sorte que le gaz circulant depuis la chambre de séparation jusqu'à la chambre d'adsorption à travers le conduit de raccord circule à travers l'orifice de sortie de raccord et l'orifice d'entrée de raccord, lorsqu'il est interconnecté au moyen d'un conduit externe.

9. Appareil tel que revendiqué dans la revendication 8, qui inclut un conduit externe s'étendant entre l'orifice de sortie de raccord et l'orifice d'entrée de raccord, le conduit externe incluant un composant de séchage supplémentaire à travers lequel le gaz provenant de la chambre de séparation circule pour le rendre plus sec.

10. Appareil tel que revendiqué dans la revendication 9, dans lequel le composant de séchage, supplémentaire comprend une membrane de séchage, de préférence une membrane d'échange d'humidité.

11. Appareil tel que revendiqué dans la revendication 1, dans lequel le bloc collecteur inclut des caractéristiques de fixation, pour monter le bloc et les composants attachés à celui-ci dans un ensemble de séparation des gaz.

12. Appareil tel que revendiqué dans la revendication 1, qui inclut une vanne, de préférence une électrovanne, située en aval de l'orifice de sortie de gaz par rapport à la chambre d'adsorption, au moyen de laquelle la circulation du gaz provenant de l'appareil est arrêtée.

13. Appareil destiné à générer un gaz par une électrolyse d'un liquide, qui comprend :
a. une cellule d'électrolyse depuis laquelle un mélange de gaz et de liquide est refoulé,
b. un appareil pour séparer le gaz dudit mélange, tel que revendiqué dans la revendication 1, et
c. un conduit à travers lequel le mélange de gaz et de liquide qui est refoulé de la cellule d'électrolyse est fourni à l'appareil de séparation.
